# EUROPEAN PATENT APPLICATION

(11) **EP 4 592 771 A1**
(43) Date of publication of application: **30.07.2025**
(21) Application number: 25154260.1
(22) Date of filing: 27.01.2025
(51) Int. Cl.: G05B 13/04, F02C 9/00, F02C 9/28

(54) **ADJUSTING MODEL PREDICTIVE CONTROL GOAL WEIGHTS VIA EXTERNAL DEVICE**

(30) Priority: 26.01.2024 US 202418423773
(71) Applicant: RTX Corporation, Farmington, CT 06032 (US)
(72) Inventor: ROY, Arnab, Farmington, 06032 (US); AMARI, Martin, Farmington, 06032 (US)
(74) Representative: Dehns

(57) **Abstract**

A method of operating a gas turbine engine (20; 91; 152) includes the steps of 1) providing a model predictive controller (100) programmed to control end effectors (106) on the gas turbine engine (20; 91; 152) with a weighting assigned to a plurality of goals and 2) changing the weighting for at least one of the plurality of goals based upon conditions of at least one of the gas turbine engine (20; 91; 152), or an associated aircraft (90), flight route, or environmental concerns. An embedded processing system and a gas turbine engine (20; 91; 152) are also disclosed.

## Description

### TECHNICAL FIELD

This application relates to a model predictive control incorporated in a full authority digital electronic controller ("FADEC") wherein multiple goals can be managed with variable weights.

### BACKGROUND

Gas turbine engines are known, and are incorporating increasingly complex controls and features. Typically a FADEC controls the engine.

More recently model predictive controls have been incorporated into the FADEC. Model predictive controls are able to control various operations of a gas turbine engine with weights associated with desired thrusts, thermal control, fuel efficiency and potentially other goals.

Typically these weights have been fixed once set.

### SUMMARY OF THE INVENTION

In an aspect of the present invention, a method of operating a gas turbine engine includes the steps of 1) providing a model predictive controller programmed to control end effectors on the gas turbine engine with a weighting assigned to a plurality of goals and 2) changing the weighting for at least one of the plurality of goals based upon conditions of at least one of the gas turbine engine, or an associated aircraft, flight route, or environmental concerns.

In an embodiment of the above, the plurality of goals include at least one of thrust performance, fuel efficiency and component lifing.

In another embodiment according to any of the previous embodiments, the weighting of thrust performance is increased if heavier acceleration is desirable.

In another embodiment according to any of the previous embodiments, the weighting on fuel efficiency is increased if the associated aircraft is operating in an area where fuel is relatively expensive.

In another embodiment according to any of the previous embodiments, the weighting for component lifing is increased based on the age of at least some of the components on the engine.

In another embodiment according to any of the previous embodiments, the changed weighting is entered into a data storage unit that then conveys the changed weighting into the model predictive controller.

In another embodiment according to any of the previous embodiments, the changed weighting is entered into the data storage unit while the associated aircraft is on the ground.

In another embodiment according to any of the previous embodiments, the changed weighting is entered into the data storage unit while the aircraft is in the air.

In another embodiment according to any of the previous embodiments, the weighting for component lifing is increased to keep the engine to a desired maintenance schedule.

In another aspect of the present invention, an embedded processing system includes a model predictive controller having processing circuitry operable to control end effectors on a gas turbine engine with a weighting assigned to a plurality of goals. The model predictive controller is also operable to receive changed values for the weighting for at least one of the plurality of goals based upon conditions of at least one of the gas turbine engine, or an associated aircraft, flight route, or environmental concerns.

In an embodiment of the above, the plurality of goals include at least one of thrust performance, fuel efficiency and component lifing.

In another embodiment according to any of the previous embodiments, the changed weighting values are entered into a data storage unit that then conveys the weighting into the model predictive controller.

In another embodiment according to any of the previous embodiments, the changed weighting values are entered into a data storage unit that then conveys the weighting into the model predictive controller.

In another aspect of the present invention, a gas turbine engine includes end effectors to achieve desired thrust and fuel use. A model predictive controller has processing circuitry operable to control the end effectors with a weighting assigned to a plurality of goals. The model predictive controller is also operable to receive changed values for the weighting for at least one of the plurality of goals based upon conditions of at least one of the gas turbine engine, or an associated aircraft, flight route, or environmental concerns.

In an embodiment of the above, the plurality of goals include at least one of thrust performance, fuel efficiency and component lifing.

In another embodiment according to any of the previous embodiments, the changed weighting values are entered into a data storage unit that then conveys the weighting into the model predictive controller and while the associated aircraft is on the ground.

In another embodiment according to any of the previous embodiments, the weighting of thrust performance is increased if heavier acceleration is desirable.

In another embodiment according to any of the previous embodiments, the weighting on fuel efficiency is increased if the aircraft is operating in an area where fuel is relatively expensive.

In another embodiment according to any of the previous embodiments, the weighting for component lifing is increased based on the age of at least some of the components on the engine.

In another embodiment according to any of the previous embodiments, the changed weighting values are entered into a data storage unit that then conveys the weighting into the model predictive control, and while the aircraft is in the air.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a gas turbine engine.
Figure 2A schematically shows a system, which may be a gas turbine engine, incorporating a FADEC.
Figure 2B shows details of the FADEC.
Figure 3A shows a control arrangement for performing a method step associated with the Figure 2B FADEC.
Figure 3B is a step subsequent to the Figure 3A method step.
Figure 4 shows one proposed control algorithm.
Figure 5 shows a second proposed control algorithm where goal weights have been changed from Figure 4.
Figure 6 shows yet another possible algorithm.
Figure 7A shows another embodiment.
Figure 7B shows a view similar to Figure 3B, but for the Figure 7A embodiment.

### DETAILED DESCRIPTION

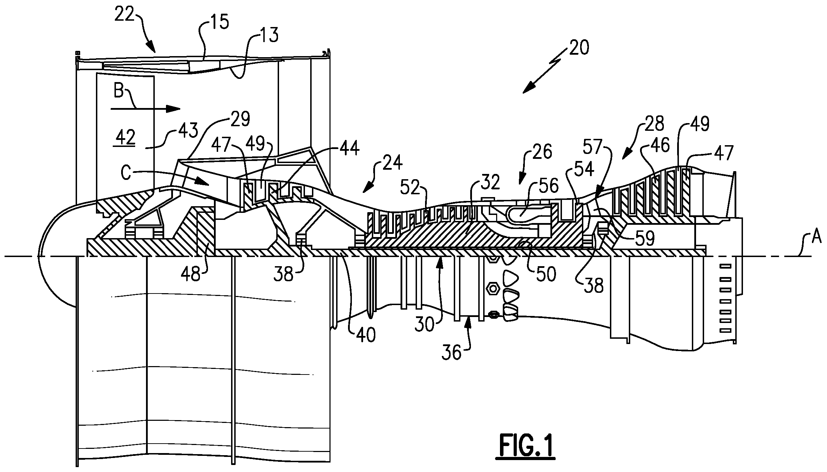

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches, or more narrowly no more than 75 inches. For example, the maximum radius of the fan blades 43 can be between 45 inches and 60 inches, such as between 50 inches and 55 inches. Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of Ibm of fuel being burned divided by Ibf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F) (30 °C). The TET may be greater than or equal to 2700.0 °F (1482.2 °C), or more narrowly less than or equal to 3500.0 °F (1926.7 °C), such as between 2750.0 °F (1510.0 °C) and 3350.0 °F (1843.3 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (537.8 °C), or more narrowly greater than or equal to 800.0 °F (426.7 °C), such as between 900.0 °F (482.2 °C) and 975.0 °F (523.9°C). The relatively low EGT can be utilized in combination with the other techniques disclosed herein to reduce fuel consumption.

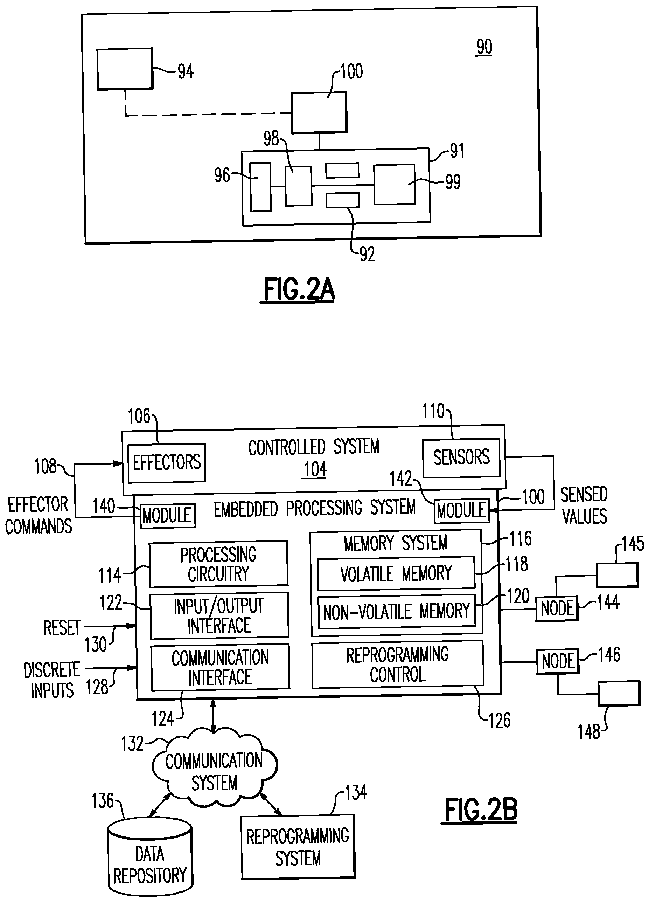

Figure 2A schematically shows an assembly 90. In a disclosed embodiment assembly 90 may be an aircraft. A gas turbine engine 91 is shown as associated with the aircraft 90. Gas turbine engine 91 has a fan 96, a compressor section 98, a combustor section 97 and a turbine section 99. It should be understood that this is a highly schematic description. While a gas turbine engine and aircraft are disclosed as the assemblies and the associated control, other assemblies and controls may benefit from this disclosure.

As shown, an embedded processing system 100 communicates with a control 94 on the aircraft 90. The embedded processing system 100 may be a full authority digital electronic controller or FADEC for engine 91.

Figure 2B shows details of a system including the FADEC 100 and the controlled system 104. Here, the controlled system 104 may include systems on the gas turbine engine of Figure 2A.

The controlled system 104 can be any type of physical system that includes one or more effectors 106 controlled by one or more effector commands 108. The effector commands 108 are received from a module 140 associated with the FADEC 100.

Examples of effectors can include one or more motors, solenoids, valves, relays, pumps, heaters and/or other such actuation control components.

A plurality of sensors 110 can capture state data associated with the controlled system 104 and provide sensed values 112 as feedback to a module 142 in the FADEC 100 to enable closed-loop control of the controlled system 104 according to one or more control laws.

Examples of the sensors can include one or more temperature sensors, pressure sensors, strain gauges, level sensors, accelerometers, rate sensors, and the like.

In the Figure 2B example, the FADEC 100 includes processing circuitry 114 and a memory system 116 configured to store a plurality of configuration items, where at least one of the configuration items includes a sequence of computer executable instructions for execution by the processing circuitry 114. Types of configuration items can include data, such as constants, configurable data, and/or fault data. Examples of computer executable instructions can include software, operating system software, and/or application software. The executable instructions can be stored or organized in any manner and at any level of abstraction, such as in connection with controlling and/or monitoring operation of the controlled system 104. The processing circuitry can be any type or combination of central processing unit ("CPU"), including one or more of: a microprocessor, a digital signal processor, a microcontroller, an application specific integrated circuit, a field programmable gate array, or the like.

In embodiments, the memory system may include volatile memory 118 such as random access memory, and non-volatile memory 120, such as flash memory, read only memory, and/or other electronic, optical, magnetic, or any other computer readable medium onto which is stored data and algorithms in a non-transitory form.

The FADEC 100 can also include one or more of an input/output interface 122, a communication interface 124, a reprogramming control 126, and/or other elements.

The input/output interface 122 can include support circuitry for interfacing with the effectors 106 and sensors 110, such as filters, amplifiers, digital-to-analog converters, analog-to-digital converters, and other such circuits to support digital and/or analog interfaces. Further, the input/output interface 122 can receive or output signals to/from other sources. As one example, discrete inputs 128 can be input to the input/output interface to establish an operating mode of the FADEC, or to trigger actions by the FADEC 100.

A reset signal 130 may also be internally induced as a result of a loss of power detected by power conditioning circuitry, and by specific hardware or software direction. The communication interface 124 can be coupled to a communication system 132, which can include one or more direct or network communication links to systems such as a reprogramming system 134, a data repository 136, or another system. The communication system 132 may also communicate with the control 94 on the associated aircraft 90.

The reprogramming system 134 can be any type of computer system operable to load new/updated configuration items to the embedded processing system 100 for storage in the memory system 116. The reprogramming system 134 can interface to the communication system 132 to a wired, wireless, optical, or magnetic coupling. The data repository 136 can serve as a data source for updating the memory system 116, for instance, with control system data, or as a data sync to offload and clear data from the memory systems, such as fault data, history data, and the like.

As also shown, systems 145 and 148 may have control nodes 144 and 146 that communicate to the embedded processing system 100. As an example, the system 145 may be an anti-ice system.

Other examples of modules or nodes may include additional wired or wireless communication interfaces or input/output devices that are remote to optimize environmental considerations such as envelope, weight, thermal, and/or power.

In general, a module is a control system that is within the embedded processing system 100, whereas a node is outside the system 100, but communicating with it.

The FADEC 100 may be a model predictive control (MPC) that allows the FADEC to project into the future. FADEC 100 uses MPC to drive effectors for closed loop jet-engine control.

Model predictive control (MPC) leverages an internal system model to predict future behavior over a finite horizon. It then optimizes a cost function within defined constraints (e.g., input/output bounds, safety limits) to find the control sequence that minimizes deviation from a desired reference state. However, only the first control action is implemented. At each subsequent time step, the process repeats, incorporating new measurements and re-planning using a receding horizon strategy. This iterative approach enables MPC to handle disturbances, anticipate future events, and handle multi-input and multi-output systems with complex dynamics. Its strengths lie in flexibility, constraint satisfaction, goal-oriented optimization, and disturbance rejection.

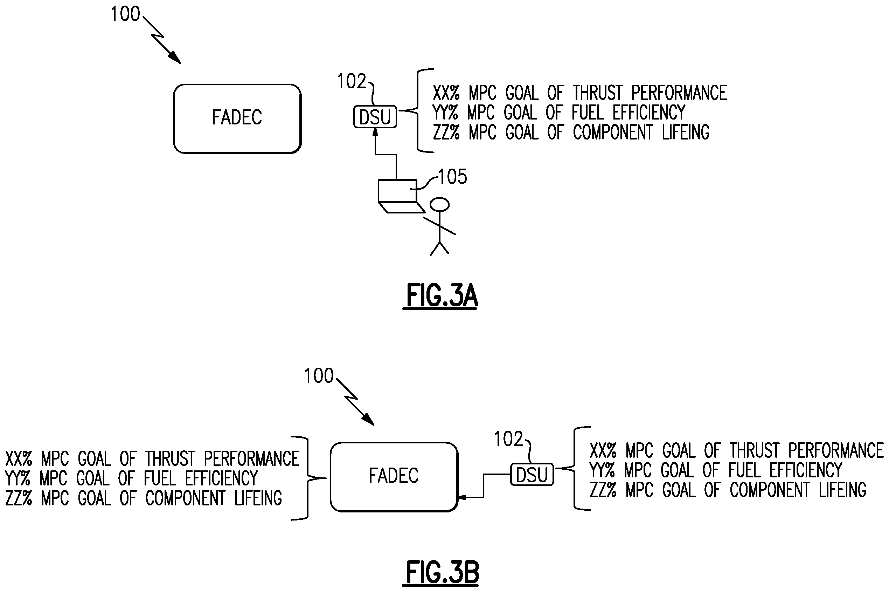

Figure 3A shows a first step in a method according to this disclosure. The FADEC 100 is associated with a data storage unit 102. The data storage unit is shown receiving weight goals from an input device 105. The data storage unit 102 could be either replaced or reprogrammed with new MPC goal weights.

As shown, there may be three selected goal weights, with one providing a weighting for thrust performance, one for fuel efficiency, and one for component lifing. As known, the FADEC 100 will control the various end effectors and operation of the engine by utilizing these weights to select between several control algorithms.

Thus, as the thrust performance weight is increased relative to fuel efficiency or component lifing weights, maximizing thrust becomes the most important goal. Conversely, as fuel efficiency goes up relative to the others, fuel efficiency becomes a more important goal. Further, component lifing would control the engine such that the stress on various components in the engine are maintained as low as practical.

Figure 3B shows a step subsequent to Figure 3A wherein the data storage unit conveys the weighting goals from the data storage unit 102 to the FADEC 100. At power up the new weight goals will be entered into its memory, and will be utilized for controlling the engine.

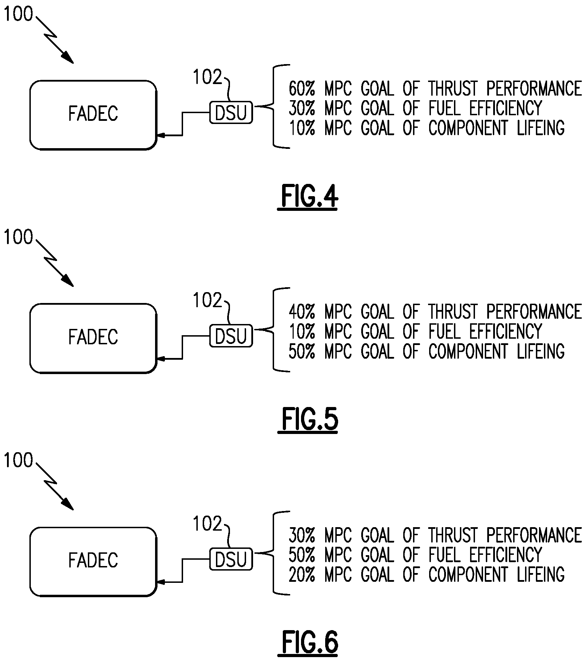

Figure 4 shows a set of weight where thrust is particularly important, and thus its weight is relatively high. Fuel efficiency still has a weight, but it is comparatively low. Component lifing is even lower. This arrangement might be utilized when thrust is particularly important. As an example, at take off on a short runway, thrust may be the most important goal.

To achieve increased thrust, fueling may be increased, and bleeds and vane positions controlled. This weighting would also lower the importance put on maintaining low temperatures.

Figure 5 shows yet another set of weights that may be utilized on a mature engine. The goal of component lifing is increased relative to Figure 4. The FADEC 100 operates the engine to maintain reduced temperature loads on certain components, say reduced temperature in the turbine.

The Figure 5 weighting could be utilized if component lifing is indicating that a maintenance schedule may be difficult to meet without emphasizing component lifing.

Also, this weighting might also be utilized where there are environmental concerns. As examples, if a flight is to be near a desert, such that air could have a high percentage of sand. Also, it may be used if the flight is in high ambient temperatures.

Converse to the Figure 4 goals, lifing weighting would, for example, reduce temperatures in the turbine.

Figure 6 shows a set of weights wherein fuel efficiency is increased relative to component lifing and on par with thrust. This might be utilized when a flight or route occurs in an area wherein fuel is relatively expensive.

With any set of relative weights, the changes could come while on the ground, or in the air. As an example, the pilot may be able to change the weighting even during a flight.

The weights add to 100% is the disclosed embodiments.

The weighting can be programmed into the data storage unit in a menu-fashion say from an engine manufacturer based upon fleet analytics. Also, a fleet operator could change the weighting based upon goals, particular flights, etc.

As can be appreciated, this disclosure would allow the goals to be changed for each flight. The weighting can be changed based upon environment or operating conditions, asset/fleet maturity, or operator preference. As an example, should a particular operator wish to minimize fuel cost, fuel efficiency might be increased.

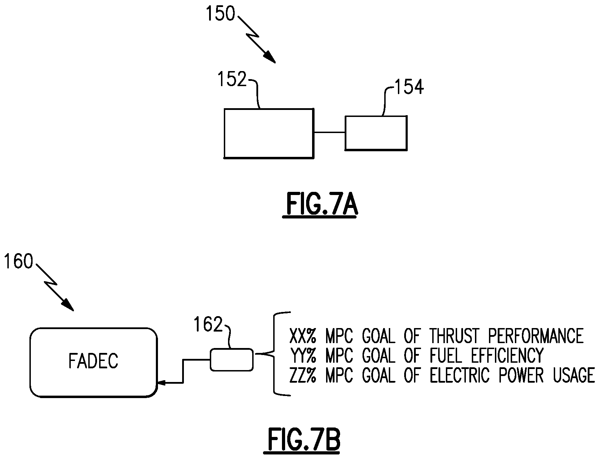

While the control is disclosed above with a traditional gas turbine engine, it can also be incorporated into a hybrid engine such as shown schematically at 150 in Figure 7A. In such engines, a gas turbine engine 152 is provided with supplemental drive from an electric motor 154. This allows the electric motor to supplement the gas turbine engine power under certain conditions, for example takeoff.

When this disclosure is applied to such a hybrid engine one of the other goals might be the percentage electric power usage or target, as examples, as shown in Figure 7B.

A method of operating a gas turbine engine under this disclosure could be said to include the steps of 1) providing a model predictive controller programmed to control end effectors on the gas turbine engine with a weighting assigned to a plurality of goals. And 2) changing the weighting for at least one of the plurality of goals based upon conditions of at least one of the gas turbine engine, or an associated aircraft, flight route, or environmental concerns.

An embedded processing system under this disclosure could be said to include a model predictive controller having processing circuitry operable to control end effectors on a gas turbine engine with a weighting assigned to a plurality of goals. The model predictive controller is also operable to receive changed values for the weighting for at least one of the plurality of goals based upon conditions of at least one of the gas turbine engine, or an associated aircraft, flight route, or environmental concerns.

A gas turbine engine under this disclosure could be said to include end effectors to achieve desired thrust and fuel use. A model predictive controller has processing circuitry operable to control the end effectors with a weighting assigned to a plurality of goals. The model predictive controller is also operable to receive changed values for the weighting for at least one of the plurality of goals based upon conditions of at least one of the gas turbine engine, or an associated aircraft, flight route, or environmental concerns.

Although embodiments have been disclosed, a worker of ordinary skill in this art would recognize that modifications would come within the scope of this disclosure. For that reason, the following claims should be studied to determine the true scope and content of this disclosure.

## Claims

1. A method of operating a gas turbine engine (20; 91; 152) comprising the steps of:
1) providing a model predictive controller (100) programmed to control end effectors (106) on the gas turbine engine (20; 91; 152) with a weighting assigned to a plurality of goals;
2) changing the weighting for at least one of the plurality of goals based upon conditions of at least one of the gas turbine engine (20; 91; 152), or an associated aircraft (90), flight route, or environmental concerns.

2. The method as set forth in claim 1, wherein the plurality of goals include at least one of thrust performance, fuel efficiency and component lifing.

3. The method as set forth in claim 2, wherein the weighting of thrust performance is increased if heavier acceleration is desirable.

4. The method as set forth in claim 2 or 3, wherein the weighting on fuel efficiency is increased if the associated aircraft (90) is operating in an area where fuel is relatively expensive.

5. The method as set forth in claim 2, 3 or 4, wherein the weighting for component lifing is increased based on the age of at least some of the components on the engine (20; 91; 152), and/or to keep the engine (20; 91; 152) to a desired maintenance schedule.

6. The method as set forth in any preceding claim, wherein the changed weighting is entered into a data storage unit (102) that then conveys the changed weighting into the model predictive controller (100).

7. The method as set forth in claim 6, wherein the changed weighting is entered into the data storage unit (102) while the associated aircraft (90) is on the ground.

8. The method as set forth in claim 6, wherein the changed weighting is entered into the data storage unit (102) while the associated aircraft (90) is in the air.

9. An embedded processing system comprising:
a model predictive controller (100) having processing circuitry (114) operable to control end effectors (106) on a gas turbine engine (20; 91; 152) with a weighting assigned to a plurality of goals, and receive changed values for the weighting for at least one of the plurality of goals based upon conditions of at least one of the gas turbine engine (20; 91; 152), or an associated aircraft (90), flight route, or environmental concerns.

10. The system (100) as set forth in claim 9, wherein the plurality of goals include at least one of thrust performance, fuel efficiency and component lifing.

11. The system (100) as set forth in claim 9 or 10, wherein the changed weighting values are entered into a data storage unit (102) that then conveys the weighting into the model predictive controller (100).

12. A gas turbine engine (20; 91; 152) comprising:
end effectors (106) to achieve desired thrust and fuel use; and
the embedded processing system of claim 9.

13. The gas turbine engine (20; 91; 152) as set forth in claim 12, wherein the changed weighting values are entered into a data storage unit (102) that then conveys the weighting into the model predictive controller (100), and while the associated aircraft (90) is on the ground or while the associated aircraft (90) is in the air.

14. The gas turbine engine (20; 91; 152) as set forth in claim 12 or 13, wherein the plurality of goals include at least one of thrust performance, fuel efficiency and component lifing.

15. The gas turbine engine (20; 91; 152) as set forth in claim 14, wherein the weighting of thrust performance is increased if heavier acceleration is desirable, and/or wherein the weighting on fuel efficiency is increased if the aircraft (90) is operating in an area where fuel is relatively expensive, and/or wherein the weighting for component lifing is increased based on the age of at least some of the components on the engine (20; 91; 152).
